# EUROPEAN PATENT SPECIFICATION

(11) **EP 1 164 803 B1**
(45) Date of publication and mention of the grant of the patent: **25.07.2007**
(21) Application number: 00650067.2
(22) Date of filing: 12.06.2000
(51) Int. Cl.: H04Q 7/22

(54) **SMS Messaging**
Kurznachrichten (SMS) Anwendung
Messagerie de service de messages courts (SMS)

(43) Date of publication of application: 19.12.2001
(73) Proprietor: 2PM Technologies Limited, Athlone, County Westmeath (IE)
(72) Inventor: Amstrong, Christopher, Athlone, County Westmeath (IE)
(74) Representative: O'Connor, Donal Henry

(56) References cited:
- EP-A- 0 964 590
- WO-A-97/41654
- WO-A-99/66747

## Description

### Introduction

The present invention relates to a short messaging service (SMS).

Essentially, a short messaging service is a service in a communications system which enables a user to send messages to and receive text messages from other users of the network. This works exceptionally well when the SMS is being used between, for example, two cellular phones that are in direct communication. However, there is a second type of messaging service where there are a large number of SMS's which a particular caller or calling entity may wish to access. There is no doubt that for a service provider such as, for example, an airline, ideally instead of having to handle calls and enquiries by way of live operators, if the enquiries could be handled by way of an SMS, this would be exceedingly efficient, not alone for the airline, but also for the person making the enquiry. A problem is the total volume of data which must be displayed.

The problem with messaging services generally is the difficulties people have in finding such messaging services and then accessing them. For example, if somebody requires the times of the flights from specific airlines such as Aer Lingus, from a specific city such as Cork Airport and may have absolutely no interest in the departures from any other airline or indeed arrivals to the airport. Therefore, what the person wishes to do is to be able to get quickly to the information on Aer Lingus departures from Cork and then obtain the necessary information. The necessary information could essentially by a menu that would scroll up giving the times of the departures. Equally well, the menu could also give telephone numbers to contact. For example, if there is some problem with one of the departures, then on the person getting the departures information, they might wish to either talk to a call centre or a specific person, in other words, if there was a particular departure which was now listed as the service not being available or available at a different time, there might be a number for somebody to call or indeed there might be a number for an interactive voice response system (IVR). Such numbers are what the person looking for the departures of Aer Lingus from Cork Airport requires. There is a problem therefore for the user. The user wishes to get to the departure times of flights from Cork Airport and has no further interest in any other flight information at this stage. It may be that having obtained the information regarding the departures from Cork Airport from a specific airline, the user may require details of other airlines departing from that airport. Similarly, a traveller may require details of taxi services, hotels and so on. Having got the details of the various services provided by various hotels, he or she may then wish to know the availability of accommodation in such hotels and further may then wish to actually make a reservation. However, what the user wishes to do is to be able to call a service and have a menu that the user can choose from.

One of the problems with SMS is that the use of SMS has been growing exponentially. While the SMS generally involves the transmission of short messages, the number and amount of these messages are increasing. Therefore, if the one service provider, often called a short messaging service centre (SMSC) or SMS provider (SMP), is used, the SMP has to have a database and a short message gateway. The database is used for storing short messages as well as for storing a database of subscribers. The gateway/interworking block is responsible for interfacing the SMS to the GMS network and delivering the short message to the recipient. Thus, there is a considerable amount of storage, etc. required. While the SMS of the prior art generally functions properly to satisfy the various specifications of GSM and equally of WAP, they do suffer the problem that the cost of the prior art SMS is large, primarily due to the large amount of memory required. Effectively, what the prior art short messaging service does is to maintain a database with lists of hundreds of thousands of subscribers and hundreds and thousands of messages.

Ideally, what is required is to have something that would allow subscribers access any short message they require without the necessity for the message to be necessarily stored by the SMP but that simply the SMP would allow access by a subscriber to such messages by contacting the SMS content provider (SMCP). Alternatively, the SMP should be able to store the messages but would not have to store a large number of subscribers but would simply have to have some means of charging the subscriber for the service. Secondly, as the user uses various short SMSs, it will become apparent to the user that they do not necessarily want all the services and that they may then wish to create and manipulate the menus so that the user can prepare for himself or herself a menu of services that will allow them use the particular service without the need to indulge in a considerable amount of searching.

At the same time, for the SMP, instead of just simply having all the services of a hotel as a message on the SMS server, it would be simply enough to give to the user who chooses particular hotels from the menu, the number of the hotel to, in effect, contact the hotel directly. In other situations, a user might require more general hotel information and this, for the user, is important but equally well for the hotel proprietors as they will wish to ensure that their hotel appears on the menu. The whole purpose of any such service should be to allow the user access the service quickly, make contact with the desired service provider without the necessity to go through an elaborate searching process.

While the consumer or customer wishes to obtain the service in the most efficient manner possible, the consumer also does not wish to pay considerable sums for such a service. Therefore, the charge to the user must be relatively small and this means that the user must, in some way, spend relatively little time on the communications network. Neither does the SMP wish to be connected to the communications network for a long time as the user attempts to obtain the necessary information. Thus, for both the user and the provider, there is a need to cut down the cost of the provision of the information. At the same time, the SMP wishes to receive revenue from the messaging service and this has to be addressed. Further, the SMP may be providing information for client SMCPs of the SMP, which clients who are providing information, will not necessarily wish to charge for the information. The SMCP may be perfectly willing to allow the SMP charge for access to the menu but once access has been achieved, then the SMCP may not wish to make further charges or, in certain circumstances, may wish to assume charges already incurred by the user.

Ideally, any such service should be relatively inexpensive to set up and should not require the consent of any telephone operator. What is needed is that the SMS should not require that the mobile phone operator be the provider of the service, in other words, they should not be the providers of the SMS centre. At the moment, all SMS services emanate from mobile phone operators and thus the mobile phone operator effectively controls the charge of the service.

Ideally, what is required is that the mobile phone operators are not the SMPs providers. Ideally, the market for SMSs should be opened up to any SMP and equally should be available to any content provider. In many instances, content providers are not prepared to avail of the SMPs because they are too expensive but if the centres could allow content providers to provide the information relatively inexpensively for the content provider or indeed, at no charge to the content provider, then the SMS would become much more useful to the content provider and hence the consumer.

One system for distributing information is that disclosed in PCT Patent Application No. WO 99/66747 in the name of Telefonaktiebolaget LM Ericsson. This application describes a useful way of broadcasting information to a plurality of mobile communication devices without using up precious bandwidth. This is achieved by sending only headlines to each of the mobile communications devices as the broadcasts and thereafter allowing the users of the mobile communications devices to select the full article associated with the headline. The full article may be sent to the mobile communication device itself or indeed may be sent to another device such as an email address or a fax machine. Finally, the invention does not require the user of a mobile communication device to poll the system for headlines data as the system automatically pushes the data out to each of the mobile communications devices. In this way, the users will always have up-to-date information sent to them.

The present invention is directed towards providing an improved SMS.

### Statements of Invention

According to the invention, there is provided a method and an SMS as defined in the claims of providing an interactive short messaging service (SMS) from a short messaging service provider (SMP) to a user.

Because the SMP immediately downloads the information and terminates the call, the length of the call is very short and therefore less costly. This cutting off of the communications every time is particularly advantageous, for example, if, in any way, the communications is unstable, this is a small specific task that can be accomplished quickly and once the information has been downloaded, the communications is terminated and it does not matter what is the condition of the reception or communications system. The user has the information and even if there is any problem with the reception, it is already stored and ready for use on the communications device.

Ideally, the SMP downloads SMMs as often as required until the user terminates the session. Essentially, it is an iterative process. A menu is downloaded, the menu, for example, may lead directly to a CSM the user requires such as, for example, the times of the football match or the football match score, while the CSM may be a menu in itself. A user might have originally looked up a menu or dialled in to the SMP looking for sporting events and would have dialled the number of sporting events. That menu would then be downloaded to the users communications device such as a mobile phone and the user would scroll through the various sporting events such as cricket, sailing, soccer, rugby, etc., all of which would in turn give a contact number. The user would choose, for example, one of the items from the menu, for example, rugby, and then another menu would be displayed, which menu might give all the short messages in relation to the various matches such as which were taking place in Dublin. Then the user would terminate the second call having got the necessary information. However, equally well, when looking up and obtaining rugby matches in Dublin, you might find it consisted of a further set of menus divided into premier clubs, second division clubs, schoolboys and so on, in which case a further menu item would have to be chosen to obtain the desired information. Thus, it will be appreciated that the unique identifier of the SMM is in turn stored in another SMM with its own unique identifier as a CSM. It will be appreciated that the SMMs are stored in a hierarchical fashion.

In many instances, the SMP additionally itself stores and downloads the CSMs. This is the conventional way in which messages are stored but it is not, by any means, essential for the present invention in that at least one CSM is stored separately by a short messaging content provider (SMCP) and the unique identifier includes a contact URL for downloading the CSM from the SMCP. The advantage of this is considerable for the SMCP who may control the inputting of data, can have whatever data the content provider wishes to display and wishes to give to customers or people gaining access. For example, a content provider might give different information to trade customers than to retail customers. Further, the content provider is now in total control of the updating, etc. of the information and this reduces the burden considerably on the SMP who no longer has to store large amounts of data on the central SMP computer but the data can be stored by the content provider. This also obviates, for the content provider, the need to continually update the SMP and to check that the data being distributed by the SMP is correct. It also avoids any possibility of corruption of data. The content provider has total control of the short messages.

Ideally, on using the contact URL for downloading a CSM from the party storing the CSM, the party identifies the communications device and downloads the information depending on the identity of the communications device. Alternatively, the CSM is only delivered on the communications device sending a unique password identifying a user or class of users. Thus, it will be appreciated that the actual content can be controlled so that, for example, companies can provide different people or classes of people with different information. Further, ideally in many instances the SMCP is a WAP server and the CSM downloaded allows access to the full WAP services provided through the WAP server. The advantage of this will be immediately apparent because this will allow, for example, on-line booking services, to be provided or a customer relations management (CRM) system to exploit WAP to let staff access, review and update a customer database when out of the office. In effect this present invention will assist in transforming the WAP phone into a fully fledged business tool. It will also allow the conventional phone to carry out many of the functions of a WAP phone in that a considerable amount of information such as emails, etc. can be downloaded to the user by, for example, a central office or a home computer.

In one way of carrying out the invention, the method provides that on receiving a request for an SMM, the SMP obtains the location of the communications device from the network operator and the SMP downloads an SMM appropriate to the location of the communications device. The great advantage of this is that, for example, if the service provider is aware of the location of an enquirer or user, the service provider can download, for example, information specific to that geographic region. A user in Dublin will require the weather in Dublin and not the weather in Cork, should the user require the latter he or she will be able to access it. However, in general terms, when, for example, the user were to look for local weather, that is exactly what they would get and the SMP would simply identify the location of the user and then download the correct SMM.

Ideally, at least some of the SMMs are provided as a speech message. In this latter situation, on the communications device accessing the SMS, the communications device sends an additional instruction whereby all SMMs and CSMs are downloaded as speech messages. Being able to download SMMs and CSMs would be particularly important for, for example, those travelling and driving motorcars and the like where, having to read text may be difficult if not dangerous.

In one method according to the invention, the communication device stores a predetermined number of SMMs and as another SMM is loaded, the SMM stored for the longest time is deleted. The great of advantage of this is that, for example, the last five messages could be stored so that at any stage, the user could retrace his or her steps and choose an item from a stored SMM.

In many instances, with each SMM downloaded, an additional short message is downloaded. Such a message may, for example, be an advertising, message or a simple greeting from a sponsor.

Ideally, in accordance with the invention, on receiving a short message for storage as a CSM, the steps are performed of:-
storing the message in a suitable format;
assigning a label to the message;
assigning a contact URL for use by the communications device, and
entering the label and contact URL of the CSM in at least one SMM.

It will be appreciated that, on the user desiring to avail of the SMS, the following steps are performed:-
the user operates the communications device to contact the SMP by using the unique identifier of the required SMM;
the SMP answers;
the SMP downloads the SMM;
the SMP terminates the call;
the user scrolls the SMM;
the user chooses a CSM from the SMM;
the user uses the unique identifier of the required CSM obtained from the SMM to access the CSM;
the CSM is downloaded to the user; and
the call terminates.

It will be appreciated that when the CSM downloaded is a further SMM, the unique identifier of the new SMM is downloaded and the steps repeated by the user and SMP until the required CSM is located or the user terminates. This leaves the user in total control of the system. Obviously, when the CSM is provided by the SMP, the SMP terminates the call once the CSM is downloaded. However, in cases where the CSM is provided by a SMCP directly, the call is terminated by the user when the required communication of information has been achieved. This may not necessarily be desired. For example, the SMCP may in fact wish to provide further services to the user and therefore, in certain instances, the communications can be kept open although the communication of the first contact which would have been through the SMP will have previously been deleted and terminated.

In one embodiment of the invention, the SMP downloads an identifier database to the communications device and the user stores the unique identifier of SMMs and CSMs in the identifier database for subsequent use.

Ideally, when the unique identifier used establishes direct contact with the SMCP, the unique identifier contains a further identifier for the SMP to confirm to the SMP of the contact between user and SMCP.

In some instances, the further identifier is hidden from the user and is not displayed. If a further identifier is not provided, then the SMP would not know when a user had availed of its service. The user could have stored the direct contact number of the SMCP and might subsequently contact the SMCP directly and the SMP would not know that the new contact with the SMCP had been made. While it might not necessarily wish to charge the SMCP, it might in fact want to at least know the number of contacts that were made with the SMCP which contacts were not necessarily made through the SMP. This could have charging and other implications as will be appreciated.

It is envisaged that the CSMs can allow many situations to arise other than simply the provision of a short text message. For example, they could allow the establishment of direct communications between the user and an interactive voice response system (IVR) or could allow the establishment of a direct communications link with an identified person or group of persons. These could be very useful services.

Ideally, the SMCP computer includes a program to download SMMs and CSMs in accordance with the method directly to the communications device.

### Detailed Description of the Invention

The invention will be more clearly understood from the following description of an embodiment thereof, given by way of example only, with reference to the accompanying drawings, in which:-
Fig. 1 is a stylised view of an SMS localised information notification network according to the invention,
Fig. 2 is a stylised view of such SMS service for a hotel service,
Fig. 3 is a flowchart showing the set-up of the SMS data,
Fig. 4 is a flowchart showing the SMS method in use, and
Fig. 5 is a flowchart showing the SMS method in use for a particular example of air travel.

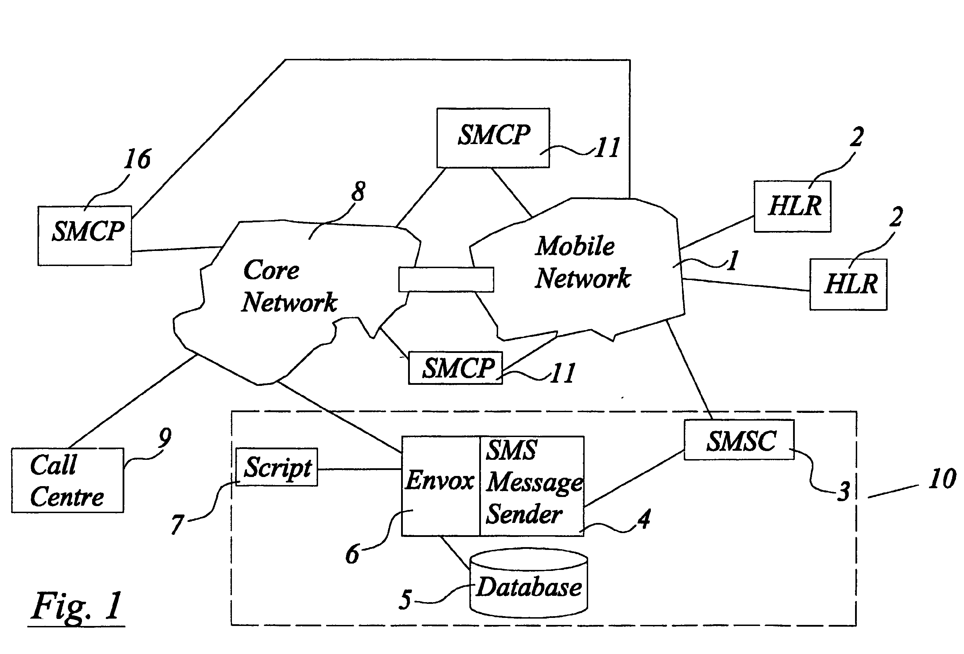

Referring to the drawings and initially to Fig. 1, there is illustrated a mobile network 1 having a plurality of subscribers or users 2 each having a home location register (HLR), a short messaging service centre computer (SMSC) 3 which includes an SMS message sender 4, a database 5, the interfacing being done over a transmission control protocol/internet protocol (TCP/IP) and a gateway envox 6, all of which is operated by a short messaging service provider (SMP). Script, in the form of messages, is illustrated being inputted by a unit 7. This all is part of or ancillary to the short messaging service centre computer 3 even though they are shown separately and form the portion of the SMS under the control of the SMP and are delineated by the interrupted lines and referred to generally for ease of understanding as the SMP 10. Effectively then, reference in this specification to the SMP may sometimes actually be a reference to the computer and other times to the centre or provider. However, for ease, they are used synonymously and interchangeably. Also identified is a core network 8 and call centre 9. This is effectively the same as a conventional SMS system and is merely illustrated to show the operation of the invention.

Finally, there is illustrated some short messaging content providers (SMCPs) 11 which are shown as connected both to the mobile network 1 and to the core network 8. They do not necessarily have to be connected to both and might simply be only connected to the core network 8, in which case all the messages from the SMCP 11 would be delivered through the SMP while, as will be described hereinafter, when connected directly to the mobile network 1, it is possible for the SMCP to deliver messages to the user.

It will be appreciated that the service can be provided under WAP and in this specification, a reference to conventional SMS services and the SMS service according to the present invention is also intended to encompass the provision under WAP. In some instances, reference is made to WAP services but to avoid confusion, they are kept to a minimum. However, they must be considered as referenced when reading this specification.

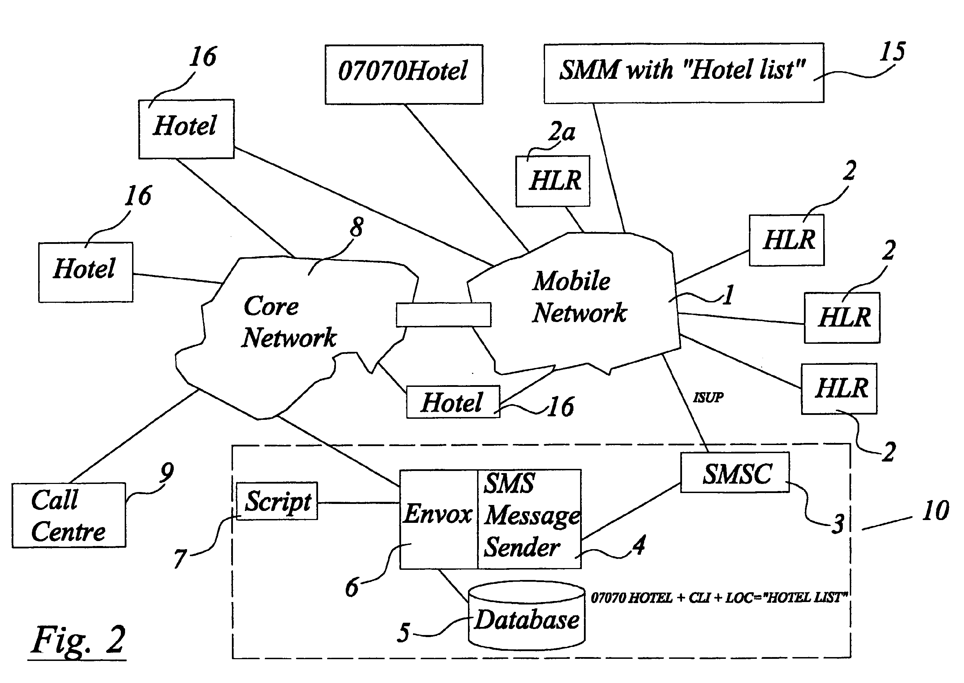

Referring now to Fig. 2, there is shown in simple outline, for example, how one user carrying a mobile phone and identified by the reference numeral 2(a), uses the communications network 1 to contact the SMP by dialling the number 07070, adding their CLI and thus locating where they are to the SMP. Then the SMP downloads the short messaging menu (SMM) in the form of a short messaging with a hotel list as identified by the reference numeral 15 in Fig. 2. This hotel list could contain a series of names and contact URLs for various hotels 16. Once the SMM had been downloaded to the user 2(a), the communications is broken and the user 2(a) now has on the mobile phone a list of local hotels as a menu of hotels, each with unique URL so that all the user has to do is to choose the hotel, press the URL and then probably be put into direct contact with the chosen hotel 16. Thus effectively and before we discuss in great detail how the invention works, what the user has done is obtained a menu of hotels as an SMM for the SMP. That menu, once downloaded, is on the users mobile phone, the contact with the SMP has been terminated and then the user has a choice of various hotels more than likely to contact directly or indeed to download from the SMP further details. However, presuming that the user contacts the hotels directly, then any future communication is with the hotels.

For example, the following tables will give some idea how a visitor to Ireland would obtain details of a hotel or indeed any user. For example, the user would dial 07URLHOTELS and then a short message menu (SMM) would be delivered as given in Table 1. When the SMM had been delivered, the communication between the SMP and the user is terminated. Then the user views Table 1 and can then click to the various options using the URLs listed. They have been shown simply as merely locations but it could be any other system. Then, having chosen the option of Dublin, by clicking at 0785600, Table 2 is displayed as another SMM. Again, immediately Table 2 has been downloaded to the user, the communications is broken with the SMP. Then the user can view Table 2 and can see that the contact URLs for various hotels in various locations and say, for example, again the user chooses hotels in Dublin 1 and 2, then on clicking onto that portion of the menu in Table 2, Table 3 is then displayed to the user. This again lists various contact numbers and we presume that in this instance, the user decides that he or she wishes to stay at a four star hotel in the area they have chosen and then they simply click to four star hotels and Table 4 is then produced which has another menu. At this stage, while contact numbers are shown as being contact numbers to the SMP, they could equally well be contact numbers to the hotel when the user would simply then click on to, for example, the Shelbourne Hotel and would be put directly through to what is effectively the content provider. By being put through to the hotel, it might display all the tariffs, etc. before even voice contact is made. It is essentially a hierarchical downloading of menus in which case all the user has done is clicked on and off to the SMP and probably a total communications time for these four tables is in the order of seconds.

### SMM1

### 07URLHOTELS

**TABLE 1**

| **Irish Hotel Information** | | |
|---|---|---|
| | | |
| Dublin | DUB | 0785600 |
| Cork | COR | 0785601 |
| Limerick | LIM | 0785602 |
| Ulster | UL | 0785603 |
| Munster | MUN | 0785604 |
| Leinster | LEN | 0785605 |
| Connaught | CON | 0785606 |

**TABLE 2**

| **Dub 0785600** | |
|---|---|
| | |
| Dublin 1 and 2 | 0785700 |
| Dublin 4 and 6 | 0785701 |
| South County | 0785702 |
| Dublin 3 and 5 | 0785703 |
| North County | 0785704 |

**TABLE 3**

| **Dub 0785700** | |
|---|---|
| | |
| Hot. 4 star (£100+) | 0785800 |
| Hot. 3 star (£70-100) | 0785801 |
| Hot. Budget | 0785802 |

**TABLE 4**

| **Dub 0785800** | |
|---|---|
| | |
| Jurys | 0785900 |
| Westbury | 0785901 |
| Gresham | 0785902 |
| Shelbourne | 0785903 |

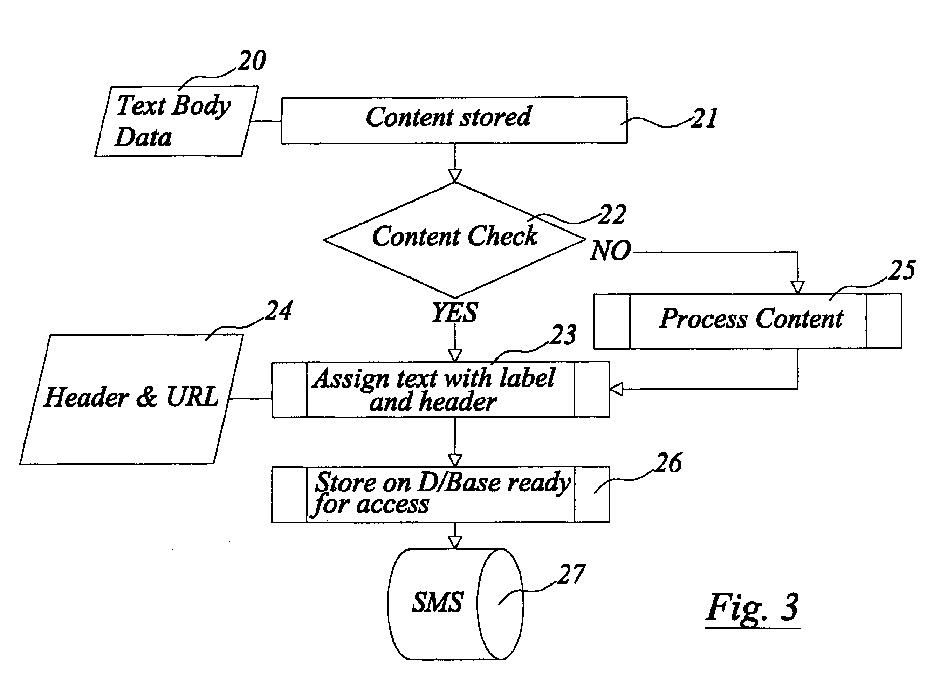

Referring now to Fig. 3, the initial steps of setting up the SMS system are described. Firstly, text and data is inputted in step 20 by an SMS content provider (SMCP). In step 21, the text is checked for special characters, for example, non SMS-able characters, the content is stored, transferred and processed as ASCII or similar character set. In step 22, it is queried whether the contents is in required SMS character content and message length. If this is as required, then in step 23, the text is assigned with a label and header, as required, and obtained by carrying out step 24.

Additional data properties which might include various information for a menu in relation to the text can be supplied in step 24. Also in step 24, the text can be assigned a suitable label that will allow it to be identified, together with an optional header, such as, for example, a greeting, a sponsors message, for instance, a particular hotel suggesting that they have had special discounts for the weekend and so on may be also provided in step 24. However, if the content is not in required SMS character format or message length, then, in step 25, the content has to be converted into the correct format and message length and then steps 23 and 24 are carried out. After the completion of step 23, the information is now entered into the database in step 26. Now that the message has been stored as a content short message (CSM) in step 26, the message is then entered into one or more menus to provide a short message menu (SMM) and this is carried out in step 27. Thus, for example, and referring back to the previous information, the particular information of the short message service might be the rates for the hotel Jurys which would be accessed by dialling the number 0785900 in Table 4. However, to enter that, it would be entered into the menu of Table 4 which would in turn lead to it either being accessed by direct dialling of 0785900 or by going through Table 3 or Table 2 or starting by a user in Table 1 and doing all the steps between Table 1 and Table 4. Thus, by step 27, the SMSC has been set up in the correct menu. It will be appreciated that as the information expands, it will be necessary to provide additional menus and thus the set up is not by any means a static situation but could be a dynamic set up and further that the hotel might be, in taking the particular instance of a hotel, entered into more than one menu. For example, the particular information for a particular hotel might be entered in a menu of four star hotels, it might be entered into a menu of hotels in a particular location, it might be entered into a menu of hotels accepting certain credit cards and so on.

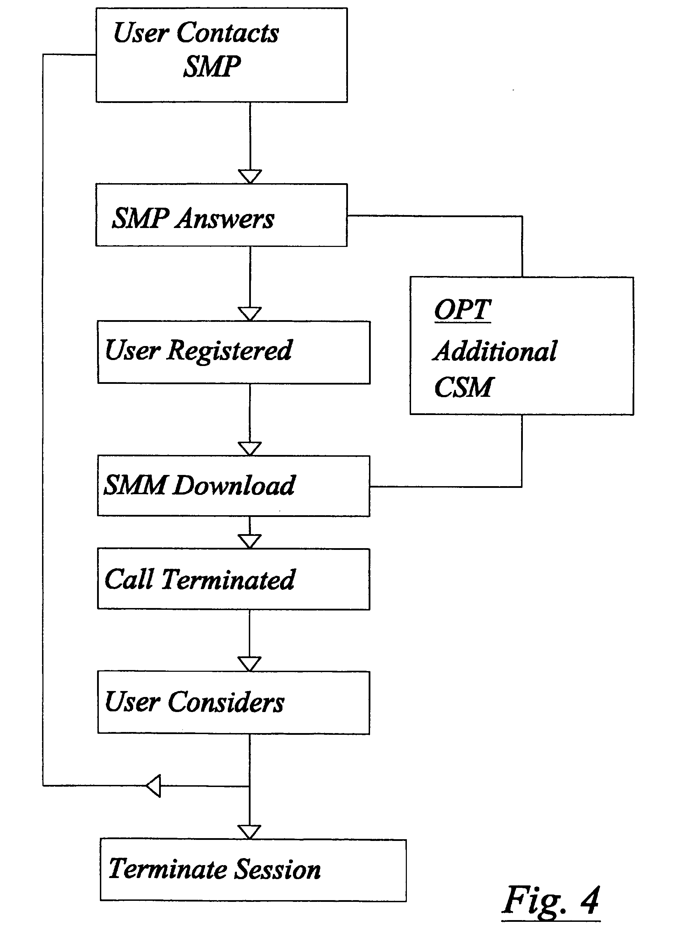

Referring now to Fig. 4, a user in step 30, dials the SMP and in step 31, the SMP answers. In step 33, the user is registered and in step 34, the SMM is downloaded and in step 35, the call is terminated. In step 36, the user considers the information downloaded and then either uses the menu to obtain a CSM by using, in this case, the mobile phone to contact the URL of the CSM or possibly to obtain another message thus repeating step 30 onwards until such a time as the user has received the information he or she requires or has decided to terminate the session in step 37. Step 38 which is illustrated as an optional step and has the words "OPT' on it to show that it is optional, when the SMP answers, the SMP can either optionally deliver an additional short message such as, for example, a sponsors greeting or advertising in step 38 which is downloaded simultaneously as the SMM is downloaded.

It will be appreciated that when the user is registered, the user's CLI may also be registered and indeed the call ID and handset location may be captured and this can be used in the delivery of the messages. It will be appreciated that after each all is terminated, a call charge will be levied on the user, depending on the manner in which the service has been provided. What must be appreciated is that in step 36, the user may decide not to avail of any of the menu items and indeed may terminate the call or may decide to use one of the items and then, as stated above, the operation is repeated.

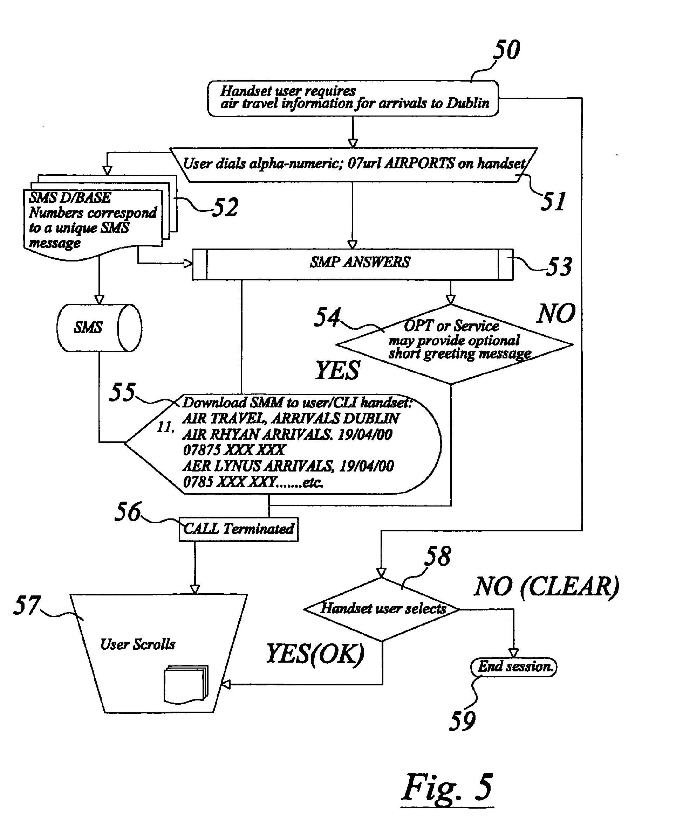

Referring to Fig. 5, there is illustrated an example of SMS for air travel where in step 50, a mobile phone user wants air travel information for arrivals at Dublin Airport. In step 51, the user dials an alphanumeric number, in this case, 07URL AIRPORTS on the handset and if there are any additional digits dialled, these may be ignored by the Telecom operator. Then, the number dialled will correspond, as shown in step 52, to a particular unique SMS message, that is to say, one of the SMMs previously provided. Then, in step 53, the SMP automatically answers. The previously dialled number in step 51 is used to access the respective message and command procedure. The CLI of the user is registered and identified and therefore, in step 54, the SMP may provide, from the content provider, an additional message. In step 55, the compiled SMM is sent by the SMP via the SMS centre to the user when the menu is downloaded to the user, for example, in the format shown. In step 56, the call is terminated. In step 57, having consulted the menu, the user selects, either deciding in step 58 to terminate the session in step 59, or in step 56, to choose one of the menus previously displayed in step 55. For example, it might be the last option number 5 as listed in step 55 when again the user would simply click on to option number 5 and that SMS message would be downloaded to the user. In step 57, the user consults the menu. In step 58, the user either accesses another SMM or a short message as the case may be, repeating step 50 onwards, or alternatively the user decides not to, clears and ends the session in step 59. It will be appreciated that ending the session, the user may have, in step 57, obtained the information he or she requires.

What must be appreciated is that the user can take any option they like and the user has a full range of options presented. Firstly, it will be appreciated that, strictly speaking, the present service is a pre-WAP service that utilises the GSM SMS messaging transport system but can easily be adapted to the WAP system.

Essentially, when the customer wants to retrieve a message, all they have to do is to call the number using their standard GSM mobile phone. The SMP answers the call and then issues a call disconnect. By answering the call, a per call charge is occurred, whatever this may be, since when the call is made, the caller HLR or CLI has been retrieved. Therefore, a charge can be made.

It is envisaged that a certain prefix number will be chosen for the service. This prefix number can then be followed by various other numbers, for example, if the number had an alphanumeric prefix such as 07URL or 07WAP and then the various other services and menus could be separate, for example, 07URL hotels, 07URL Hertz cars, 07URL train times, and so on. These could themselves be part of the menu system, in other words, the user would simply dial the generic number they had and that generic number would then display, as a first menu, in accordance with the system, all these other numbers. Obviously, if the caller already had those numbers, then they would dial directly to 07URL hotels rather than going to 07URL for the general service and subsequently have to download 07URL hotels. The idea is that with one number, the user can get any services they so require as a first menu. One can well envisage the situation that if one dialled the number 07URL airport, one might then receive the first SMS menu which would contain a specific URL such as various airline arrivals at specific airports. Then the user would simply choose the specific airport and the specific airline and again click that number on the telephone to be connected directly to the messaging service being provided by that number which could be anything, it will be appreciated, from another text message, a voice message, an IVR system, and so on. This saves the user a considerable amount of time and effort.

Having retrieved a text message, it may in turn give menu options for further messages. Obviously, for the SMS centre, the money charge can be either to the content provider who wishes to provide a free telephone service or to the user who will pay on a per call basis. Obviously, if at some later period, the user contacts a content provider directly by clicking onto a free phone number having previously obtained it from the SMP, then, unless there is some identification of that number, the centre will not be aware that the call had been made. However, this can be relatively easily overcome as explained below. As each call is used to trigger an SMS on Demand, they will be charged a fee for each call and this can be set at any suitable charge.

It will be appreciated that essentially it is an iterative process that can be carried out for as long as the user requires. It is envisaged that the SMP may additionally itself store and download CSMs to the user. As has already been explained, these CSMs can either be CSMs as we know them, in other words, strictly a content message such as, for example, the time of arrival of a train or may be a short message in the form of a menu which will not give the exact information but will require accessing a further menu or simply a short message.

It is envisaged that at least one CSM will be stored separately by a short messaging content provider and that the unique identifier given will include a contract URL for downloading the CSM from the SMCP. In the latter case, it will often be necessary that the party storing the CSM identify the communications device and only download the information depending on the identity of the communications device as certain information may not be downloaded to everybody. Similarly, the CSM may be only sent on the communications device sending a unique password for the user. This will be very much the case where a company was downloading sensitive information that only should be downloaded to its own staff. Similarly, if the SMCP is a WAP server, then the content provider could simply provide all the services of a WAP without any more difficulties. It is also envisaged that the SMMs and indeed the CSMs can be downloaded all in voice or some in voice or they can be done by way of interactive voice or indeed the short message could be the URL of a specific person or, if not of a specific person, of a class of persons such as people operating a call centre or a maintenance department. It is envisaged that one of the ways in which revenue may be obtained is by optionally downloading additional messages from sponsors, advertisers and so on when the SMS is accessed.

Essentially, the invention is a relatively simple one in the sense that when a short message service provider (SMP) receives from a short message content provider (SMCP), a message to be entered into the SMPs database, the SMP stores the message in a suitable format, assigns some label to the message and assigns a contact URL for use by the communications device and then enters the label and contact URL of the CSM in at least one short messaging menu (SMM). Once it has done that, then the message is identified by that URL and header in that particular menu. Then, when a user wants to obtain the necessary short message by availing of the SMS, the user operates the telecommunications device to contact the SMP by using the unique identifier of the required SMM if it is known. For example, a user might know the particular contact number for hotels in Dublin and would bypass the general contact number of the menu or SMM for all hotels. Then the SMP answers the call. The SMP downloads the desired SMM which has been identified by the URL dialled by the user. Immediately it has been downloaded, the SMP terminates the call. Then the user has a menu and the user can scroll the menu until he or she obtains the necessary CSM that he wishes to pursue and take from the SMM and then dials the URL of that CSM and then either receives an actual short message with the information required such as the time of trains leaving the city in the next two hours or alternatively has to choose that from a further menu as the actual CSM downloaded did not give the information but merely a menu from which the information can be chosen. The user, as it will be appreciated, uses the unique identifier of the required CSM obtained from the SMM to access the CSM and when that CSM is downloaded to the user and the call has been terminated, the user continues to use the SMS until the desired information is retrieved or the user decides it is no longer necessary to continue.

In some instances, when the user contacts directly a content provider, the SMCP may not terminate the call immediately as it may be desired to have a dialog with the caller. It is envisaged that a certain number of the SMMs and CSMs will be stored on a users telecommunications device. For example, five menus could be stored and as a new menu is added or a message is added, then the longest resident message would be deleted.

It is also envisaged that the user may be able to download from the SMP a database into which the user can enter as a permanent record, the URLs, etc. of various either short SMMs or CSMs as required by the user. In the latter case, the user would simply store the unique identifier of the SMM and CSM in the identifier database for subsequent use. It is envisaged that the unique identifier used to establish direct contact with an SMCP and not with the SMP, might also contain a further identifier for the SMP to inform the SMP of the contact between the user and the SMCP. This might be necessary for charging and therefore it will be appreciated that this identifier might be hidden from the user and not displayed.

It will be appreciated that the present invention will be carried out generally by computers having storage means and that the SMC computers will also be used which will either be contacted directly with the SMP or may have their information downloaded by direct access from the user. This has considerable advantages to both the SMP and the SMCP. Firstly, for the SMP, it no longer has to store all the information and be responsible for its updating and at the same time, the SMCP has absolute control over its information and does not have to check as to whether the information has been correctly loaded or not.

It will be appreciated that the present invention is an interactive SMS information service. It breaks down the information into very specific blocks and identifies that information by a number which acts as a URL.

It will also be appreciated that it has no new hardware nor indeed does the user have to learn anything. One of the great advantages of the present service is that it does not require any consent from network providers and it merely uses the network as any other users of the network, contacting people or telephones on that network.

The invention is not limited, as will be appreciated, to the method described above but can be relatively easily altered.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied in both construction and detail.

## Claims

1. A method of providing an interactive short messaging service, SMS, from a short messaging service provider, SMP, (10) to a user (2) having a communications device connected to a communications network (1), the communications device including a keypad or voice activator for establishing communications between it and the SMP (10) and an alphanumeric display device comprising initially:-
storing short messages each with a unique identifier for access by the communications device as content short messages, CSM;
the SMP (10) stores the unique identifier for a plurality of CSMs in a menu of short messages to provide a short messages menu, SMM, with its own unique identifier;
at least some of the SMMs are in turn stored in other SMMs with their own unique identifiers as a CSM;
and then on a communications device accessing the SMS, the steps are performed of:-
the SMP (10) downloads the SMM to the communications device; and
the SMP (10) terminates the call on completion of the downloading.

2. A method as claimed in claim 1 in which the SMP (10) downloads SMMs as often as required until the user (2) terminates the session.

3. A method as claimed in any preceding claim, in which the SMMs are stored in a hierarchical fashion.

4. A method as claimed in any preceding claim, in which the SMP (10) additionally itself stores and downloads the CSMs.

5. A method as claimed in any preceding claim, in which at least one CSM is stored separately by a short messaging content provider, SMCP, (11) and the unique identifier includes a contact URL for downloading the CSM from the SMCP (11).

6. A method as claimed in claim 4 or 5 in which, on using the contact URL for downloading a CSM from the party storing the CSM, the party identifies the communications device and downloads the information depending on the identity of the communications device.

7. A method as claimed in any of claims 4 to 6, in which the CSM is only delivered on the communications device sending a unique password identifying a user (2) or class of users.

8. A method as claimed in any of claims 5 to 7, in which the SMCP (11) is a WAP server and the CSM downloaded allows access to the full WAP services provided through the WAP server.

9. A method as claimed in any preceding claim, in which, on receiving a request for an SMM, the SMP (10) obtains the location of the communications device from the network operator and the SMP downloads an SMM appropriate to the location of the communications device.

10. A method as claimed in any preceding claim, in which at least some of the SMMs are provided as a speech message.

11. A method as claimed in any preceding claim, in which on the communications device accessing the SMS, the communications device sends an additional instruction whereby all SMMs and CSMs are downloaded as speech messages.

12. A method as claimed in any preceding claim, in which the communications device stores a predetermined number of SMMs and as another SMM is loaded, the SMM stored for the longest time is deleted.

13. A method as claimed in any preceding claim, in which with each SMM downloaded, an additional short message is downloaded.

14. A method as claimed in claim 8, in which the additional short message is an advertising message.

15. A method as claimed in any preceding claim, in which, on receiving a short message for storage as a CSM, the steps are performed of:-
storing the message in a suitable format;
assigning a label to the message;
assigning a contact URL for use by the communications device, and
entering the label and contact URL of the CSM in at least one SMM.

16. A method as claimed in any preceding claim, in which the user (2), on desiring to avail of the SMS, the following steps are performed:-
the user (2) operates the communications device to contact the SMP (10) by using the unique identifier of the required SMM;
the SMP (10) answers;
the SMP (10) downloads the SMM;
the SMP (10) terminates the call;
the user (2) scrolls the SMM;
the user (2) chooses a CSM from the SMM;
the user (2) uses the unique identifier of the required CSM obtained from the SMM to access the CSM;
the CSM is downloaded to the user (2); and
the call terminates.

17. A method as claimed in claim 16, in which, when the CSM downloaded is a further SMM, the unique identifier of the new SMM is downloaded and the steps repeated by the user (2) and SMP until the required CSM is located or the user (2) terminates.

18. A method as claimed in claim 16 or 17, in which when the CSM is provided by the SMP (10), the SMP (10) terminates the call once the CSM is downloaded.

19. A method as claimed in claim 16 or 17, in which when the CSM is provided by a SMCP (11) directly, the call is terminated by the user (2) when the required communication of information has been achieved.

20. A method as claimed in any of claims 16 to 19, in which:-
the SMP (10) downloads an identifier database to the communications device; and
the user (2) stores the unique identifier of SMMs and CSMs in the identifier database for subsequent use.

21. A method as claimed in claim 20, in which, when the unique identifier used establishes direct contact with the SMCP (11), the unique identifier contains a further identifier for the SMP (10) to confirm to the SMP (10) of the contact between user (2) and SMCP (11).

22. A method as claimed in claim 21, in which the further identifier is hidden from the user (2) and is not displayed.

23. A method as claimed in any preceding claim, in which at least one CSM allows the establishment of direct communications between the user (2) and an interactive voice response system, IVR.

24. A method as claimed in any of claims 1 to 22, in which at least one CSM allows the establishment of a direct communications link with an identified person or group of persons.

25. A SMS for carrying out the method as claimed in any preceding claim comprising:-
a SMP computer (3) having storage means (5) for storing content short messages, CSMs, and programmed to assign a unique identifier to the CSMs and to store the unique identifiers of a plurality of CSMs in a menu of short messages to provide a short messages menu, SMM, with it's own unique identifier, the SMP computer being programmed to store at least some of the SMMs in other SMMs with their own unique identifier as a CSM;
at least one SMCP computer (11);
users (2) having communications devices including an alphanumeric display device;
a communications network (1) interconnecting the SMP (10), SMCP (11) and the communications devices; and
a computer program stored on the SMP computer (3) to download SMMs and CSMs in accordance with the method and to terminate a call when the downloading is completed.

26. A SMS as claimed in claim 25, in which the SMCP computer (11) includes a program to download SMMs and CSMs in accordance with the method directly to the communications device.

## Patentansprüche

1. Verfahren zur Bereitstellung eines interaktiven Kurzmitteilungsdienstes SMS von einem Kurzmitteilungsdienstanbieter SMP (10) für einen Benutzer (2), der über eine Kommunikationsvorrichtung verfügt, die mit einem Kommunikationsnetz (1) verbunden ist, wobei die Kommunikationsvorrichtung ein Tastenfeld oder einen Sprachaktivator zur Herstellung der Kommunikation zwischen dieser und dem SMP (10) sowie eine alphanumerische Anzeigevorrichtung umfasst, wobei das Verfahren anfänglich Folgendes umfasst:
Speichern von Kurzmitteilungen, und zwar jede mit einem eindeutigen Etikett, für den Zugriff durch die Kommunikationsvorrichtung als Inhaltskurzmitteilungen CSM;
der SMP (10) speichert das eindeutige Etikett für eine Vielzahl von CSMs in einem Menü von Kurzmitteilungen, um ein Kurzmitteilungsmenü SMM mit seinem eigenen eindeutigen Etikett bereitzustellen;
mindestens einige der SMMs werden ihrerseits mit ihren eigenen eindeutigen Etiketten als CSM in anderen SMMs gespeichert;
und daraufhin werden auf einer Kommunikationsvorrichtung, die auf den SMS zugreift, Folgende Schritte ausgeführt:
der SMP (10) lädt das SMM in die Kommunikationsvorrichtung; und
der SMP (10) beendet den Anruf bei Vollendung des Ladevorgangs.

2. Verfahren nach Anspruch 1, wobei der SMP (10) SMMs so oft wie erforderlich lädt, bis der Benutzer (2) die Sitzung beendet.

3. Verfahren nach einem der vorhergehenden Ansprüche, wobei die SMMs in hierarchischer Weise gespeichert werden.

4. Verfahren nach einem der vorhergehenden Ansprüche, wobei der SMP (10) die CSMs zusätzlich selbst speichert und lädt.

5. Verfahren nach einem der vorhergehenden Ansprüche, wobei mindestens eine CSM von einem Kurzmitteilungsinhaltsanbieter SMCP (11) separat gespeichert wird und das eindeutige Etikett eine Kontakt-URL zum Laden der CSM von dem SMCP (11) umfasst.

6. Verfahren nach Anspruch 4 oder 5, wobei bei der Verwendung der Kontakt-URL zum Laden einer CSM von der Partei, die die CSM speichert, die Partei die Kommunikationsvorrichtung identifiziert und die Informationen abhängig von der Identität der Kommunikationsvorrichtung lädt.

7. Verfahren nach einem der Ansprüche 4 bis 6, wobei die CSM nur gesendet wird, wenn die Kommunikationsvorrichtung ein eindeutiges Passwort sendet, das einen Benutzer (2) oder eine Klasse von Benutzern identifiziert.

8. Verfahren nach einem der Ansprüche 5 bis 7, wobei der SMCP (11) ein WAP-Server ist und die geladene CSM den Zugriff auf die vollständigen WAP-Dienste erlaubt, die der WAP-Server bereitstellt.

9. Verfahren nach einem der vorhergehenden Ansprüche, wobei der SMP (10) bei Empfang einer Anfrage für ein SMM die Position der Kommunikationsvorrichtung von dem Netzbetreiber erhält und der SMP ein SMM lädt, das für die Position der Kommunikationsvorrichtung geeignet ist.

10. Verfahren nach einem der vorhergehenden Ansprüche, wobei mindestens einige der SMMs als Sprachmitteilung bereitgestellt werden.

11. Verfahren nach einem der vorhergehenden Ansprüche, wobei, wenn die Kommunikationsvorrichtung auf den SMS zugreift, die Kommunikationsvorrichtung einen zusätzlichen Befehl sendet, wodurch alle SMMs und CSMs als Sprachmitteilungen geladen werden.

12. Verfahren nach einem der vorhergehenden Ansprüche, wobei die Kommunikationsvorrichtung eine vorherbestimmte Anzahl von SMMs speichert und wenn eine weitere SMM geladen wird, wird die SMM, die für die längste Zeit gespeichert war, gelöscht.

13. Verfahren nach einem der vorhergehenden Ansprüche, wobei mit jeder geladenen SMM eine zusätzliche Kurzmitteilung geladen wird.

14. Verfahren nach Anspruch 8, wobei die zusätzliche Kurzmitteilung eine Werbemitteilung ist.

15. Verfahren nach einem der vorhergehenden Ansprüche, wobei bei Empfang einer Kurzmitteilung zur Speicherung als CSM folgende Schritte ausgeführt werden:
Speichern der Mitteilung in einem geeigneten Format;
Zuweisen eines Etiketts zu der Mitteilung;
Zuweisen einer Kontakt-URL zur Verwendung durch die Kommunikationsvorrichtung und
Eingeben des Etiketts und der Kontakt-URL der CSM in mindestens ein SMM.

16. Verfahren nach einem der vorhergehenden Ansprüche, wobei Folgende Schritte ausgeführt werden, wenn der Benutzer (2) den SMS benutzen möchte:
der Benutzer (2) bedient die Kommunikationsvorrichtung, um den SMP (10) zu kontaktieren, indem er das eindeutige Etikett des erforderlichen SMM verwendet;
der SMP (10) antwortet;
der SMP (10) lädt die SMM;
der SMP (10) beendet den Anruf;
der Benutzer (2) rollt durch das SMM;
der Benutzer (2) wählt eine CSM aus dem SMM aus;
der Benutzer (2) verwendet das eindeutige Etikett der erforderlichen CSM, die er von dem SMM erhalten hat, um auf die CSM zuzugreifen;
die CSM wird zu dem Benutzer (2) geladen und
der Anruf wird beendet.

17. Verfahren nach Anspruch 16, wobei, wenn die geladene CSM ein weiteres SMM ist, das eindeutige Etikett des neuen SMM geladen wird und die Schritte von dem Benutzer (2) und dem SMP wiederholt werden, bis die erforderliche CSM gefunden wird oder der Benutzer (2) den Vorgang beendet.

18. Verfahren nach Anspruch 16 oder 17, wobei, wenn die CSM von dem SMP (10) bereitgestellt wird, der SMP (10) den Anruf beendet, wenn die CSM geladen ist.

19. Verfahren nach Anspruch 16 oder 17, wobei, wenn die CSM von einem SMCP (11) direkt bereitgestellt wird, der Anruf von dem Benutzer (2) beendet wird, wenn die erforderliche Informationsübertragung erfolgt ist.

20. Verfahren nach einem der Ansprüche 16 bis 19, wobei:
der SMP (10) eine Etikettendatenbank in die Kommunikationsvorrichtung lädt und
der Benutzer (2) das eindeutige Etikett von SMMs und CSMs für den späteren Gebrauch in der Etikettendatenbank speichert.

21. Verfahren nach Anspruch 20, wobei das eindeutige Etikett, wenn das verwendete eindeutige Etikett einen direkten Kontakt mit dem SMCP (11) herstellt, ein weiteres Etikett für den SMP (10) enthält, um dem SMP (10) den Kontakt zwischen dem Benutzer (2) und dem SMCP (11) zu bestätigen.

22. Verfahren nach Anspruch 21, wobei das weitere Etikett vor dem Benutzer (2) verborgen und nicht angezeigt wird.

23. Verfahren nach einem der vorhergehenden Ansprüche, wobei mindestens eine CSM die Herstellung einer direkten Verbindung zwischen dem Benutzer (2) und einem interaktiven Sprachantwortsystem IVR ermöglicht.

24. Verfahren nach einem der Ansprüche 1 bis 22, wobei mindestens eine CSM die Herstellung einer direkten Kommunikationsverbindung mit einer identifizierten Person oder Personengruppe ermöglicht.

25. SMS zur Durchführung des Verfahrens nach einem der vorhergehenden Ansprüche, wobei der SMS Folgendes umfasst:
einen SMP-Computer (3), der Speichermittel (5) aufweist, um Inhaltskurzmitteilungen, CSM, zu speichern, und der so programmiert ist, dass er den CSMs ein eindeutiges Etikett zuweist und die eindeutigen Etiketten einer Vielzahl von CSMs in einem Menü von Kurzmitteilungen speichert, um ein Kurzmitteilungsmenü, SMM, mit seinem eigenen eindeutigen Etikett bereitzustellen, wobei der SMP-Computer so programmiert ist, dass er mindestens einige der SMMs in anderen SMMs mit ihrem eigenen eindeutigen Etikett als CSM speichert;
mindestens einen SMCP-Computer (11);
Benutzer (2), die über Kommunikationsvorrichtungen verfügen, die eine alphanumerische Anzeigevorrichtung umfassen;
ein Kommunikationsnetz (1), das den SMP (10), den SMCP (11) und die Kommunikationsvorrichtungen miteinander verbindet; und
ein Computerprogramm, das in dem SMP-Computer (3) gespeichert ist, um SMMs und CSMs gemäß dem Verfahren zu laden und einen Anruf zu beenden, wenn der Ladevorgang abgeschlossen ist.

26. SMS nach Anspruch 25, wobei der SMCP-Computer (11) ein Programm zum Laden von SMMs und CSMs direkt in die Kommunikationsvorrichtung gemäß dem Verfahren umfasst.

## Revendications

1. Un procédé destiné à fournir un service de messages courts interactif, SMS, à partir d'un fournisseur de service de messages courts, SMP, (10) vers un utilisateur (2) possédant un dispositif de communication connecté à un réseau de communication (1), le dispositif de communication comprenant un clavier ou un activateur vocal afin d'établir des communications entre celui-ci et le SMP (10) et un dispositif d'affichage alphanumérique comprenant au départ :
la mise en mémoire de messages courts, chacun d'eux avec un identifiant unique destiné à un accès par le dispositif de communication sous la forme de messages courts de contenu, CSM,
le SMP (10) conserve en mémoire l'identifiant unique pour une pluralité de CSM dans un menu de messages courts afin de fournir un menu de messages courts, SMM, avec son propre identifiant unique,
au moins certains des SMM sont à leur tour placés en mémoire dans d'autres SMM avec leurs propres identifiants unique sous la forme d'un CSM,
et ensuite sur un dispositif de communication accédant au SMS, les opérations suivantes sont exécutées :
le SMP (10) télécharge le SMM vers le dispositif de communication, et
le SMP (10) met fin à l'appel à l'issue du téléchargement.

2. Un procédé selon la Revendication 1 où le SMP (10) télécharge des SMM aussi souvent que nécessaire jusqu'à ce que l'utilisateur (2) mette fin à la session.

3. Un procédé selon l'une quelconque des Revendications précédentes, où les SMM sont placés en mémoire d'une manière hiérarchique.

4. Un procédé selon l'une quelconque des Revendications précédentes, où le SMP (10) de manière additionnelle place en mémoire et télécharge lui-même les CSM.

5. Un procédé selon l'une quelconque des Revendications précédentes, où au moins un CSM est conservé en mémoire séparément par un fournisseur de contenus de messages courts, SMCP, (11) et l'identifiant unique comprend une URL de contact permettant de télécharger le CSM du SMCP (11).

6. Un procédé selon la Revendication 4 ou 5 où, lors de l'utilisation de l'URL de contact pour télécharger un CSM provenant du correspondant conservant en mémoire le CSM, le correspondant identifie le dispositif de communication et télécharge les informations selon l'identité du dispositif de communication.

7. Un procédé selon l'une quelconque des Revendications 4 à 6, où le CSM est uniquement remis lorsque le dispositif de communication envoie un mot de passe unique identifiant un utilisateur (2) ou une classe d'utilisateurs.

8. Un procédé selon l'une quelconque des Revendications 5 à 7, où le SMCP (11) est un serveur WAP et le CSM téléchargé permet un accès à la totalité des services WAP fournis par l'intermédiaire du serveur WAP.

9. Un procédé selon l'une quelconque des Revendications précédentes, où, à la réception d'une demande pour un SMM, le SMP (10) obtient l'emplacement du dispositif de communication de l'opérateur de réseau et le SMP télécharge un SMM approprié à l'emplacement du dispositif de communication.

10. Un procédé selon l'une quelconque des Revendications précédentes, où au moins certains des SMM sont fournis sous la forme d'un message vocal.

11. Un procédé selon l'une quelconque des Revendications précédentes, où lorsque le dispositif de communication accède au SMS, le dispositif de communication envoie une instruction additionnelle au moyen de laquelle tous les SMM et CSM sont téléchargés sous la forme de messages vocaux.

12. Un procédé selon l'une quelconque des Revendications précédentes, où le dispositif de communication conserve en mémoire un nombre prédéterminé de SMM et lorsqu'un autre SMM est téléchargé, le SMM le plus ancien conservé en mémoire est supprimé.

13. Un procédé selon l'une quelconque des Revendications précédentes, où avec chaque SMM téléchargé, un message court additionnel est téléchargé.

14. Un procédé selon la Revendication 8, où le message court additionnel est un message publicitaire.

15. Un procédé selon l'une quelconque des Revendications précédentes, où, lors de la réception d'un message court pour mise en mémoire sous la forme d'un CSM, les opérations suivantes sont exécutées :
mise en mémoire du message dans un format adapté,
attribution d'une étiquette au message,
attribution d'une URL de contact pour une utilisation par le dispositif de communication, et
saisie de l'étiquette et de l'URL de contact du CSM dans au moins un SMM.

16. Un procédé selon l'une quelconque des Revendications précédentes, où, lorsque l'utilisateur (2) désire disposer du SMS, les opérations suivantes sont exécutées :
l'utilisateur (2) actionne le dispositif de communication afin de contacter le SMP (10) en utilisant l'identifiant unique du SMM demandé,
le SMP (10) répond,
le SMP (10) télécharge le SMM,
le SMP (10) met fin à l'appel,
l'utilisateur (2) consulte le SMM,
l'utilisateur (2) choisit un CSM dans le SMM,
l'utilisateur (2) utilise l'identifiant unique du CSM demandé obtenu du SMM pour accéder au CSM,
le CSM est téléchargé vers l'utilisateur (2), et
il est mis fin à l'appel.

17. Un procédé selon la Revendication 16, où, lorsque le CSM téléchargé est un nouveau SMM, l'identifiant unique du nouveau SMM est téléchargé et les opérations sont répétées par l'utilisateur (2) et le SMP jusqu'à ce que le CSM demandé soit repéré ou que l'utilisateur (2) mette fin à l'opération.

18. Un procédé selon la Revendication 16 ou 17, où lorsque le CSM est fourni par le SMP (10), le SMP (10) met fin à l'appel une fois que le CSM est téléchargé.

19. Un procédé selon la Revendication 16 ou 17, où lorsque le CSM est fourni directement par un SMCP (11), il est mis fin à l'appel par l'utilisateur (2) lorsque la communication d'informations demandée est accomplie.

20. Un procédé selon l'une quelconque des Revendications 16 à 19, où :
le SMP (10) télécharge une base de données d'identifiants vers le dispositif de communication, et
l'utilisateur (2) place en mémoire l'identifiant unique des SMM et des CSM dans la base de données d'identifiants pour une utilisation ultérieure.

21. Un procédé selon la Revendication 20 où, lorsque l'identifiant unique utilisé établit un contact direct avec le SMCP (11), l'identifiant unique contient un autre identifiant pour le SMP (10) permettant de confirmer au SMP (10) le contact entre l'utilisateur (2) et le SMCP (11).

22. Un procédé selon la Revendication 21, où l'autre identifiant est masqué à l'utilisateur (2) et n'est pas affiché.

23. Un procédé selon l'une quelconque des Revendications précédentes, où au moins un CSM permet l'établissement de communications directes entre l'utilisateur (2) et un système de réponse vocale interactif, IVR.

24. Un procédé selon l'une quelconque des Revendications 1 à 22, où au moins un CSM permet l'établissement d'une liaison de communication directe avec une personne ou un groupe de personnes identifiés.

25. Un SMS destiné à exécuter le procédé selon l'une quelconque des Revendications précédentes comprenant :
un ordinateur SMP (3) doté d'un moyen de stockage (5) destiné à conserver en mémoire des messages courts de contenu, CSM, et programmé de façon à attribuer un identifiant unique aux CSM et de façon à conserver en mémoire les identifiants uniques d'une pluralité de CSM dans un menu de messages courts afin de fournir un menu de messages courts, SMM, avec son propre identifiant unique, l'ordinateur SMP étant programmé de façon à conserver en mémoire au moins certains des SMM dans d'autres SMM avec leur propre identifiant unique sous la forme d'un CSM,
au moins un ordinateur SMCP (11),
des utilisateurs (2) possédant des dispositifs de communication comprenant un dispositif d'affichage alphanumérique,
un réseau de communication (1) interconnectant le SMP (10), le SMCP (11) et les dispositifs de communication, et
un programme informatique conservé en mémoire sur l'ordinateur SMP (3) destiné à télécharger des SMM et des CSM conformément au procédé et à mettre fin à un appel lorsque le téléchargement est terminé.

26. Un SMS selon la Revendication 25, où l'ordinateur SMCP (11) contient un programme destiné à télécharger des SMM et des CSM conformément au procédé directement sur le dispositif de communication.
